# EUROPÄISCHE PATENTSCHRIFT

(11) **EP 4 114 692 B1**
(45) Veröffentlichungstag und Bekanntmachung des Hinweises auf die Patenterteilung: **16.08.2023**
(21) Anmeldenummer: 21702249.0
(22) Anmeldetag: 27.01.2021
(51) Int. Cl.: B60R 16/037, B60N 2/00, B60R 21/015, G06F 3/01, G06N 3/02

(54) **VERFAHREN UND VORRICHTUNG ZUR EINSTELLUNG ODER STEUERUNG EINER FAHRZEUGKOMPONENTE**
METHOD AND APPARATUS FOR ADJUSTING OR CONTROLLING A VEHICLE COMPONENT
PROCÉDÉ ET DISPOSITIF DE RÉGLAGE OU DE COMMANDE D'UN COMPOSANT DE VÉHICULE

(30) Priorität: 02.03.2020 AT 501532020
(43) Veröffentlichungstag der Anmeldung: 11.01.2023
(73) Patentinhaber: emotion3D GmbH, 1040 Wien (AT)
(72) Erfinder: HÖDLMOSER, Michael, 4861 Schörfling (AT); SEITNER, Florian, 1140 Wien (AT); BEYER, Sebastian, 1160 Wien (AT)
(74) Vertreter: Puchberger & Partner Patentanwälte
(86) Internationale Anmeldenummer: PCT/EP2021/051825
(87) Internationale Veröffentlichungsnummer: WO 2021/175516

(56) Entgegenhaltungen:
- EP-A1- 3 581 440
- EP-B1- 2 952 661
- CN-A- 110 466 458
- DE-A1-102012 020 855
- DE-A1-102018 210 028
- DE-A1-102018 210 902
- US-A1- 2003 116 698

## Beschreibung

Die Erfindung betrifft ein Verfahren und eine Vorrichtung zur intelligenten Einstellung oder Steuerung einer oder mehrerer Fahrzeugkomponenten.

Fahrzeuge besitzen eine Vielzahl von unterschiedlichen Komponenten, die durch Eingabebefehle der Passagiere eingestellt oder gesteuert werden können. Beispielsweise können Sitze in einem definierten Bereich nach vorne, nach hinten, nach oben oder nach unten verschoben oder geneigt werden sowie auf fix definierte Positionen verstellt werden. Seitenspiegel können geneigt oder eingeklappt werden. Displays können ebenfalls geneigt werden oder auch, abhängig vom Eingabebefehl des Passagiers, unterschiedliche Inhalte anzeigen. Das Lenkrad kann beim Einsteigen durch einen Eingabebefehl des Fahrers an die Größe des Fahrers angepasst werden, Signale und Aufschriften können auf Befehl ihr Erscheinungsbild ändern, und die Airbags können auf einen Befehl des Fahrers deaktiviert werden. Die Begriffe "Einstellung" und "Steuerung" können dabei die Einnahme einer vordefinierten Position, aber auch eine kontinuierliche Bewegung der Fahrzeugkomponente bezeichnen.

Aus dem Stand der Technik sind manuelle Eingabebefehle zur Steuerung von Fahrzeugkomponenten bekannt, beispielsweise mit Schaltern oder berührungsempfindlichen Bildschirmen. Ferner ist es aus dem Stand der Technik bekannt, Fahrzeugkomponenten mit Handgesten zu steuern, wobei Vorrichtungen zur Gestenerfassung, insbesondere Tiefenkameras, vorgesehen sind.

Der Passagier muss sich dabei jedoch eine Reihe von Handgesten einprägen, um beispielsweise seinen Sitz mittels der passenden Handgeste nach vorne oder nach hinten schieben zu können.

In der Praxis tritt jedoch das Problem auf, dass die verwendeten Handgesten unnatürlich sind, da diese in keinem direkten Zusammenhang mit der durch die Handgesten ausgelösten Aktion stehen. Die Druckschrift DE102018210902A zeigt ein Verfahren und eine Vorrichtung nach dem Oberbegriff der Ansprüche 1 und 9. In der EP3581440A werden durch maschinelles Lernen Modelle erstellt, die angewendet werden, um im Betrieb aus den Messwerten der Sensoren die Sitzposition der Insassen erkennen zu können.

Der Erfindung liegt somit die Aufgabe zugrunde, ein Verfahren und eine Vorrichtung zu schaffen, mit denen Passagiere bestimmte Fahrzeugkomponenten besonders einfach und intuitiv einstellen und steuern können.

Diese Aufgabe wird erfindungsgemäß durch eine Vorrichtung und ein Verfahren gemäß den unabhängigen Patentansprüchen 1 und 9 gelöst.

Ein erfindungsgemäßes Verfahren zur Einstellung oder Steuerung zumindest einer Fahrzeugkomponente in einem Fahrzeug umfasst mehrere Schritte.

Zunächst erfolgt eine Aufnahme, durch eine im Fahrzeug angeordnete Bildaufnahmeeinheit in 2-D oder 3-D, eines Bildes oder eines Videos einer vorzugsweise sitzenden Person im Fahrzeug. Bei der Person kann es sich um den Fahrer oder einen Passagier des Fahrzeugs handeln. Bei der Bildaufnahmeeinheit kann es sich um eine Kamera, insbesondere auch eine Tiefenkamera, handeln. Das aufgenommene Bild oder Video wird an eine Datenverarbeitungseinheit übermittelt.

Die Datenverarbeitungseinheit extrahiert Körperdaten der Person und generiert daraus ein Körperdatenmodell. Diese Extraktion erfolgt beispielsweise durch herkömmliche Bildverarbeitungsroutinen, durch einen Vergleich mit vorab in einer Datenbank hinterlegten Referenzkörperbildern, oder durch Verwendung eines vorab mit Trainingsdaten trainierten neuronalen Netzes, das Teil der Datenverarbeitungseinheit sein kann.

Statt eines neuronalen Netzes können auch andere Klassifikationsverfahren aus dem Bereich des maschinellen Lernens erfindungsgemäß vorgesehen sein, wie zum Beispiel Entscheidungsbäume bzw. Random Forests, die als Teil der Datenverarbeitungseinheit implementiert sein können. Eine spezielle Ausgestaltung des Sitzes oder eine spezielle Bekleidung ist erfindungsgemäß für die Extraktion der Körperdaten nicht erforderlich.

Bei den Körperdaten kann es sich beispielsweise um Positionen von definierten Schlüsselpunkten, wie zum Beispiel Handgelenken, Armgelenken, Brustbein, Schultergelenken, Kniegelenken, Ellbogengelenken, Hüftgelenken, oder Kopfmittelpunkte, sowie um Abmessungen zwischen diesen Positionen, wie zum Beispiel Schulterbreite, Beckenbreite, Halslänge, Oberarmlänge, Unterarmlänge, Oberschenkellänge, und dergleichen handeln. Das entsprechende Körperdatenmodell ist in Form einer Tabelle mit 2-dimensionalen Koordinaten von Schlüsselpunkten des Körpers, eines Graphen mit Verbindungslinien zwischen den erkannten Schlüsselpunkten, oder einer anderen geeigneten Datenstruktur in der Datenverarbeitungseinheit implementiert.

In einem weiteren Schritt vergleicht eine Komparatoreinheit das Körperdatenmodell mit einer Vielzahl von aus einer Datenbank entnommenen Referenzkörperposen. Die Komparatoreinheit kann mit der Datenbank über eine Schnittstelle verbunden sein. Dabei kann es sich um eine externe Datenbank auf einem Server im Internet handeln, oder eine interne Datenbank im Fahrzeug.

In diesem Zusammenhang bezeichnet der Begriff Körperpose eine Körperhaltung, die sich aus den Körperdaten ergibt, also eine bestimmte Anordnung und Position von definierten Schlüsselpunkten des Körpers und deren räumliche Position zueinander. Beispielsweise können eine "entspannte", eine "angespannte", eine "nach oben blickende" oder "auf die Seite blickende" Körperpose und viele weitere Körperposen in der Datenbank als Referenzkörperposen definiert sein.

Die Referenzkörperposen können zur Vorbereitung des erfindungsgemäßen Verfahrens in der Datenbank angelegt werden, indem unterschiedliche Personen in einer Vielzahl von Bildern und mit Variabilität in Hinblick auf ihre Körperpose, ihre Bekleidung, die Beleuchtung und andere Kritieren klassifiziert werden. Die Gelenkspositionen dieser Personen sind dabei bekannt, sodass sich die Referenzkörperposen in einfacher Weise als Datenmodell in der Datenbank abspeichern lassen. Wie die Körperdatenmodelle können auch die Referenzkörperposen beispielsweise in Form einer Tabelle mit 2-dimensionalen Koordinaten von Schlüsselpunkten des Körpers, eines Graphen mit Verbindungslinien zwischen den Schlüsselpunkten, oder einer anderen geeigneten Datenstruktur in der Datenverarbeitungseinheit implementiert sein.

Als Ergebnis des Vergleichs wählt die Komparatoreinheit eine mit dem aktuellen Körperdatenmodell am besten übereinstimmende Referenzkörperpose aus.

Erfindungsgemäß ist den Referenzkörperposen in der Datenbank jeweils zumindest ein Aktuator und zumindest eine Einstellung oder eine bestimmte Aktion dieses Aktuators zugeordnet. Bei dem Aktuator kann es sich um eine beliebige einstellbare, also beeinflussbare Fahrzeugkomponente handeln. Bei der zugeordneten Einstellung kann es sich um eine vordefinierte Einstellung handeln, es kann auch eine bestimmte laufende Aktion des Aktuators zugeordnet sein, beispielsweise eine kontinuierliche Bewegung wie "nach vorne fahren", "nach rechts schwenken", eine kontinuierliche Anpassung der Fahrzeugkomponente wie "heller werden", "dimmen", "lauter werden", "leiser werden", oder dergleichen.

Beispielsweise kann es sich um einen elektrischen Stellmotor für einen Sitz, den Auslösemechanismus eines Airbags, oder eine Anzeigevorrichtung im Armaturenbrett des Fahrzeugs handeln. Auch ein Innenspiegel, ein Außenspiegel, oder ein Lenkrad kann ein erfindungsgemäß einstellbarer Aktuator sein.

In einem weiteren Schritt aktiviert eine Aktivierungseinheit jenen Aktuator, der der ausgewählten Referenzkörperpose zugeordnet ist, und zwar mit jener Einstellung des Aktuators, welche der ausgewählten Referenzkörperpose zugeordnet ist.

Erfindungsgemäß können Referenzkörperposen definiert sein, die zum Beispiel den Sitz nach vorne, hinten, oben, oder unten bewegen. Es können Referenzkörperposen definiert sein, um beliebige Fahrzeugkomponenten beliebig auszurichten oder ihr Erscheinungsbild zu verändern.

Dabei können die Posen sowohl kontinuierliche Bewegungen von Fahrzeugteilen auslösen (z.B. Sitze, die sich nach vorne und hinten bewegen), aber auch das Anfahren von diskreten Positionen auslösen (z.B. Lenkrad in zuvor definierter Position) und das Verändern ihres Erscheinungsbildes hervorrufen (z.B. unterschiedliche Inhalte auf Displays oder Elemente, die ein- oder ausgeschaltet werden können, etc.).

Es können auch Aktionen von mehreren Fahrzeugteilen miteinander kombiniert werden (z.B. die gleichzeitige Ausrichtung von Lenkrad und Sitz bei der Einnahme entsprechender Körperposen).

Erfindungsgemäß kann vorgesehen sein, dass die Referenzkörperposen durch vorab durchgeführte Untersuchungen mit Testpersonen erstellt werden, wobei beobachtet wird, welche Körperposen die Testpersonen in der Regel einnehmen, bevor sie bestimmte Einstellungen der Aktuatoren durchführen. Beispielsweise kann eine gestreckte Körperhaltung darauf hindeuten, dass ein Bedürfnis besteht, den Innenspiegel zu justieren, oder ein seitlich nach links oder rechts oben gedrehter Kopf, dass ein Außenspiegel nicht korrekt eingestellt ist. Die ermittelten Referenzkörperposen können in der Datenbank abgespeichert sein.

Beispielhaft können Referenzkörperposen wie folgt definiert sein:
(a) "Nach vorne gelehnt": Sobald der Oberkörper nach vorne geneigt ist, fährt der Sitz nach vorne, die Auslösungsstärke des Airbags wird entsprechend verringert, Beleuchtungen beim Lenkrad werden gedimmt, Displays verändern ihren Inhalt.
(b) "Nach hinten gelehnt": Sobald der Oberkörper nach hinten geneigt ist, fährt der Sitz nach hinten, die Auslösungsstärke des Airbags wird entsprechend verstärkt, Beleuchtungen beim Lenkrad werden verstärkt, Displays verändern ihren Inhalt.
(c) "Chill-Pose": Sobald die "Chill-Pose", eine besonders entspannte Körperhaltung, eingenommen wird, nehmen Fahrzeugteile entsprechend zuvor definierte Zustände ein (z.B. Sitz fährt in eine fix definierte Rückenlagenposition).

Dieser erfindungsgemäße Vergleich mit vordefinierten Referenzkörperposen zur Adjustierung und Adaptierung von Fahrzeugteilen erlaubt eine außerordentlich intuitive Handhabung des Systems. So ist es nicht mehr notwendig, dass ungewöhnliche Handgesten ausgeführt werden müssen, um zum Beispiel einen Sitz nach vorne / hinten / oben / unten bewegen zu können. Darüber hinaus können die Körperposen direkt mit Aktionen und Anpassungen verknüpft werden, wodurch sich eine völlig neue Form der intuitiven Interaktion zwischen den Personen im Fahrzeug und den Fahrzeugkomponenten ergibt.

Erfindungsgemäß kann also vorgesehen sein, dass vorab eine Vielzahl von definierten Referenzkörperposen in der Datenbank gespeichert werden, wobei jede Referenzkörperpose mit zumindest einem Aktuator und zumindest einer Einstellung dieses Aktuators verknüpft wird.

Es kann aber auch vorgesehen sein, dass eine Referenzkörperpose mit einer Vielzahl an Aktuatoren kombiniert wird, wobei für jeden Aktuator eine definierte Einstellung vorgesehen ist. Ferner kann vorgesehen sein, dass die Aktivierungseinheit vor der Aktivierung des Aktuators die aktuelle Einstellung des Aktuators überprüft, und diesen nur aktiviert, wenn es erforderlich ist.

Das erfindungsgemäße Verfahren beschränkt sich jedoch nicht auf Körperhaltungen. Es kann auch erfindungsgemäß vorgesehen sein, dass die Datenverarbeitungseinheit ein Gesichtsdatenmodell generiert und daraus die Blickrichtung oder die Kopforientierung der Person extrahiert. Die detektierte Blickrichtung oder Kopforientierung kann dann von der Datenverarbeitungseinheit bei der Auswahl der Referenzkörperpose berücksichtigt werden. Die detektierte Blickrichtung oder Kopforientierung kann auch von der Aktivierungseinheit bei der Aktivierung des Aktuators berücksichtigt werden.

Auch das Gesichtsdatenmodell kann in Form einer Tabelle mit 2-dimensionalen Koordinaten von Schlüsselpunkten des Gesichts (etwa Augen, Ohren, Nase), eines Graphen mit Verbindungslinien zwischen den erkannten Schlüsselpunkten, oder einer anderen geeigneten Datenstruktur in der Datenverarbeitungseinheit implementiert sein.

Erfindungsgemäß kann der Vergleich des Körperdatenmodells mit den Referenzkörperposen und die Auswahl einer passenden Referenzkörperpose erfolgen, indem die Komparatoreinheit einen Matching-Algorithmus oder ein Klassifikationsverfahren aus dem Bereich des maschinellen Lernens anwendet.

Dabei kann die Komparatoreinheit insbesondere ein mit Referenzkörperbildern trainiertes neuronales Netz einsetzen. Die Komparatoreinheit kann vorzugsweise ein Teil der Datenverarbeitungseinheit sein.

Der Vergleich und die Auswahl können jedoch auch erfolgen, indem die Komparatoreinheit vorbestimmte Heuristiken anwendet. Beispielsweise kann der Vergleich des Körperdatenmodells mit den Referenzkörperposen und die Auswahl einer passenden Referenzkörperpose erfolgen, indem die Komparatoreinheit räumliche Körperkenngrößen des Körperdatenmodells bestimmt, beispielsweise die Schulterbreite, die Rumpflänge und die Anordnung der Schultergelenke, der Oberarme, der Unterarme und des Beckens der Person. Die Komparatoreinheit wendet dann vorbestimmte Heuristiken auf diese Körperkenngrößen an, um eine der Referenzkörperposen auszuwählen, beispielsweise den Winkel zwischen den detektierten Oberarmen und Unterarmen der Person.

Die Erfindung umfasst ferner ein computerlesbares Speichermedium mit Anweisungen, die eine Datenverarbeitungseinheit zur Ausführung eines erfindungsgemäßen Verfahrens veranlassen.

Die Erfindung erstreckt sich auch auf eine Vorrichtung zur Einstellung eines Aktuators in einem Fahrzeug, umfassend eine im Fahrzeug angeordnete Bildaufnahmeeinheit in 2-D oder 3-D, die zur Aufnahme eines Bildes oder eines Videos einer vorzugsweise sitzenden Person im Fahrzeug ausgebildet ist.

Eine erfindungsgemäße Vorrichtung umfasst ferner eine Datenverarbeitungseinheit, die zur Extraktion von Körperdaten der Person, und zur Generierung eines Körperdatenmodells aus den Körperdaten ausgebildet ist, eine Komparatoreinheit, die zum Vergleich des Körperdatenmodells mit einer Vielzahl von aus einer Datenbank entnommenen Referenzkörperposen und Auswahl einer passenden Referenzkörperpose ausgebildet ist, und eine Aktivierungseinheit, die zur Aktivierung eines, der ausgewählten Referenzkörperpose zugeordneten Aktuators mit einer, der ausgewählten Referenzkörperpose zugeordneten Einstellung des Aktuators ausgebildet ist.

Die Bildaufnahmeeinheit kann insbesondere als Kamera ausgebildet sein. Die Kamera kann beispielsweise im Armaturenbrett oder im Bereich des Rückspiegels, der Windschutzscheibe oder des Daches des Fahrzeugs angeordnet sein. Erfindungsgemäß kann vorgesehen sein, dass die Datenverarbeitungseinheit auch dazu ausgebildet ist, ein Gesichtsdatenmodell zu generieren, daraus die Blickrichtung oder die Kopforientierung der Person zu extrahieren, und dazu ausgebildet ist, die detektierte Blickrichtung oder Kopforientierung bei der Auswahl der Referenzkörperpose zu berücksichtigen. Ebenso kann die Aktivierungseinheit dazu ausgebildet sein, die detektierte Blickrichtung oder Kopforientierung bei der Aktivierung des Aktuators zu berücksichtigen.

Die Vorrichtung kann teilweise, vorzugsweise jedoch zur Gänze in einem Fahrzeug angeordnet sein.

Es kann jedoch auch vorgesehen sein, dass die Datenverarbeitungseinheit und die Komparatoreinheit im Fahrzeug angeordnet sind und über eine Schnittstelle, beispielsweise eine drahtlose Verbindung, mit einem externen Server, beispielsweise einem Server im Internet, kommunizieren, auf dem sich gegebenenfalls eine Datenbank mit vorab hinterlegten und/oder laufend ergänzten Referenzdatenmustern befindet.

Bei der Bildaufnahmeeinheit kann es sich um eine ToF (Time-of-Flight) Kamera handeln, die dazu ausgebildet ist, ein 3D-Tiefenbild aufzunehmen. Dies erleichtert die robuste Extraktion der Körperdaten.

Die Bildaufnahmeeinheit wird im Fahrzeug vorzugsweise derart angeordnet, dass die zu analysierenden Objekte, also die sitzende Person, im aufgenommenen Bild sichtbar sind. Zur Extraktion der Körperdaten können Bildanalysebibliotheken in einer Datenbank und/oder ein mit Trainingsbeispielen trainierter Detektor, beispielsweise ein neuronales Netz herangezogen werden.

Die Datenverarbeitungseinheit kann als Mikrocontroller oder Mikrocomputer ausgebildet sein und eine zentrale Verarbeitungseinheit (CPU), einen flüchtigen Halbleiterspeicher (RAM), einen nichtflüchtigen Halbleiterspeicher (ROM, SSD-Festplatte), einen magnetischen Speicher (Festplatte) und/oder einen optischen Speicher (CD-ROM) sowie Schnittstelleneinheiten (Ethernet, USB) und dergleichen umfassen.

Die Bestandteile derartiger Datenverarbeitungseinheiten sind dem Fachmann grundsätzlich bekannt. Die Komparatoreinheit kann als separate Hardwareeinheit, oder vorzugsweise als Softwaremodul im RAM oder ROM der Datenverarbeitungseinheit vorgesehen sein. Die Datenbank kann als Softwaremodul in der Datenverarbeitungseinheit oder in einem externen Server vorgesehen sein. Die Datenbank kann Trainingsdaten beinhalten, beispielsweise Informationen über den Körperbau typischer Personen (Gelenkspositionen, Größe, Umfänge, etc.).

Die Komparatoreinheit 2. ist dazu ausgebildet, zum Vergleich des Körperdatenmodells mit den Referenzkörperposen und zur Auswahl einer passenden Referenzkörperpose einen Matching-Algorithmus oder ein Klassifikationsverfahren aus dem Bereich des maschinellen Lernens anzuwenden, insbesondere ein mit Referenzkörperbildern trainiertes neuronales Netz. Das Klassifikationsverfahren kann ein Teil der Datenverarbeitungseinheit sein.

Die Komparatoreinheit kann dazu ausgebildet ist, beim Vergleich des Körperdatenmodells mit den Referenzkörperposen und bei der Auswahl einer passenden Referenzkörperpose räumliche Körperkenngrößen des Körperdatenmodells zu bestimmen, beispielsweise die Schulterbreite, die Rumpflänge und die Anordnung der Schultergelenke, der Oberarme, der Unterarme und des Beckens der Person.

Die Komparatoreinheit kann ferner dazu ausgebildet sein, vorbestimmte Heuristiken anzuwenden, um eine der Referenzkörperposen auszuwählen, beispielsweise den Winkel zwischen den detektierten Oberarmen und Unterarmen der Person.

Weitere erfindungsgemäße Merkmale ergeben sich aus den Ansprüchen, den Ausführungsbeispielen und den Figuren.

Die Erfindung wird im Folgenden an Hand eines exemplarischen, nicht ausschließlichen Ausführungsbeispiels erläutert.
Fig. 1 zeigt eine schematische Darstellung einer Ausführungsform einer erfindungsgemäßen Vorrichtung in einem Fahrzeug;
Figs. 2a - 2c zeigen schematische Darstellungen verschiedener ermittelter Körperdatenmodelle;
Fig. 3a - 3b zeigen weitere schematische Darstellungen verschiedener ermittelter Körperdatenmodelle;
Fig. 4 zeigt eine schematische Darstellung des Datenflusses in einer Ausführungsform eines erfindungsgemäßen Verfahrens;
Fig. 5 zeigt eine schematische Darstellung eines Körperdatenmodells und den Vergleich mit Referenzkörperposen.

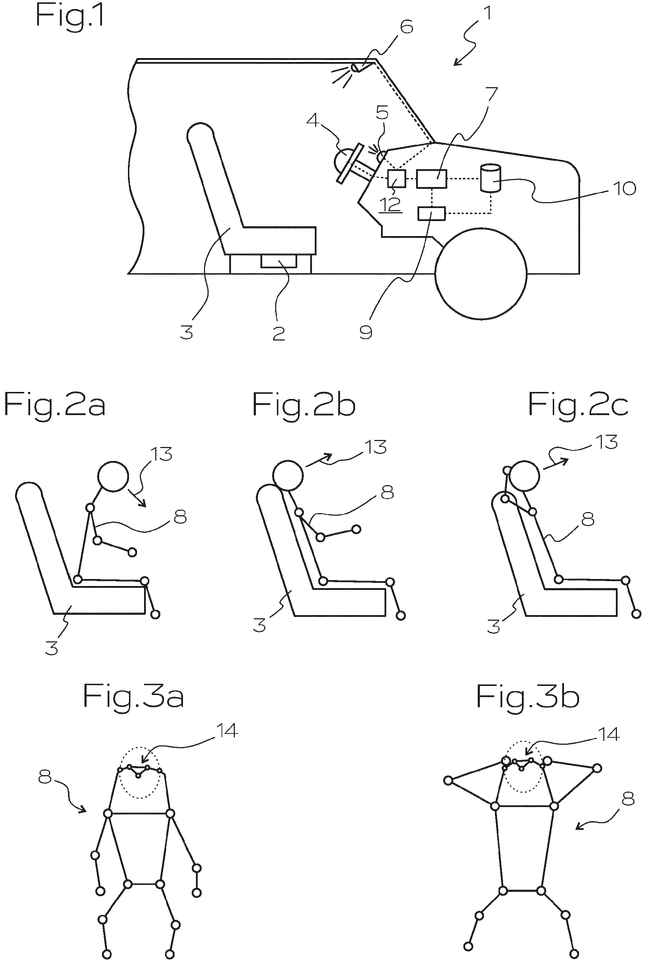

Fig. 1 zeigt eine schematische Darstellung einer Ausführungsform einer erfindungsgemäßen Vorrichtung in einem Fahrzeug 1. Im Innenraum des Fahrzeugs 1 befindet sich ein Sitz 3 mit einem elektrischen Stellantrieb 2 für eine (nicht dargestellte) Person. Es ist eine zentral über dem Lenker am Dach des Fahrzeuginnenraums angeordnete Bildaufnahmeeinheit 6 in Form einer Kamera vorgesehen, die derart ausgerichtet ist, dass sie die am Sitz 3 sitzende Person zum Großteil erfasst. Ferner befinden sich im Fahrzeug 1 eine Datenverarbeitungseinheit 7, eine damit verbundene Komparatoreinheit 9 in Form eines Softwaremoduls und eine ebenfalls damit verbundene Aktivierungseinheit 12.

Die Datenverarbeitungseinheit 7 und die Komparatoreinheit 9 sind in diesem Ausführungsbeispiel mit einer internen Datenbank 10 verbunden. Die Aktivierungseinheit 12 ist beispielsweise über einen Feldbus mit einer Vielzahl von Aktuatoren im Fahrzeug verbunden, beispielsweise mit einem Airbag 4 und einer Anzeigevorrichtung 5 in Form einer Lampe oder einer elektronischen Anzeige auf einem Display im Armaturenbrett. Ferner ist die Aktivierungseinheit 12 auch mit dem Stellmotor 2 für den Sitz 3 verbunden.

Figs. 2a - 2c zeigen schematische Darstellungen der von einer Ausführungsform der erfindungsgemäßen Vorrichtung erstellten Körperdatenmodelle 8 einer in einem Sitz 3 sitzenden Person von der Seite. Die Person ist schematisch angedeutet, ebenfalls dargestellt ist die detektierte Blickrichtung 13 der Person. Fig. 2a entspricht einer angestrengten Körperpose, Fig. 2b einer normalen Körperpose mit Blick auf den Rückspiegel des Fahrzeugs, und Fig. 2c einer entspannten Körperpose.

Figs. 3a - 3b zeigen weitere schematische Darstellungen der von einer Ausführungsform der erfindungsgemäßen Vorrichtung erstellten Körperdatenmodelle 8 einer in einem Sitz 3 sitzenden Person von vorne. Hier ist auch die Repräsentation eines Gesichtsdatenmodells 14 dargestellt, welches die Position der Augen, der Nase und der Ohren umfasst. Aus dem Gesichtsdatenmodell 14 kann die Blickrichtung und die Kopforientierung der Person detektiert werden. Fig. 3a entspricht dabei einer normalen Körperpose, Fig. 3b einer entspannten Körperpose.

Die Komparatoreinheit 9 erkennt in den Ausführungsbeispielen gemäß Fig. 2a - 2c die Körperpose durch Abfrage eines internen, mit Referenzdaten trainierten neuralen Netzes. Hingegen erkennt die Komparatoreinheit 9 in den Ausführungsbeispielen gemäß Fig. 3a - 3b die Körperpose durch eine vordefinierte Heuristik, beispielsweise dass der Winkel zwischen beiden Oberarmen und beiden Unterarmen der Person jeweils einen Wert von 60° unterschreitet, und die Unterschenkel nicht zueinander weisen und auch nicht parallel ausgerichtet sind.

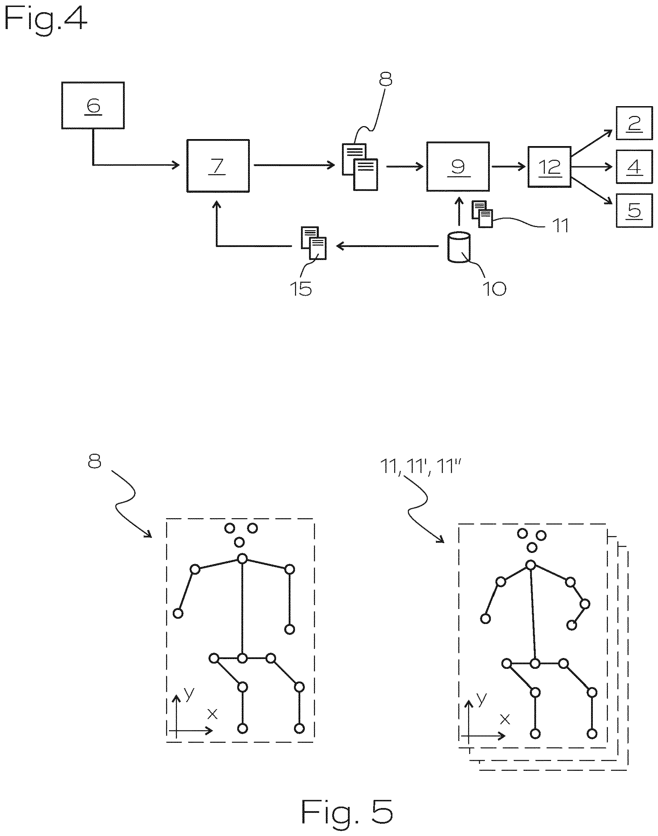

Fig. 4 zeigt eine schematische Darstellung des Datenflusses in einer Ausführungsform eines erfindungsgemäßen Verfahrens. Die Bildaufnahmeeinheit 6 liefert Fotos und/oder Videos des Sitzes 3 mit der Person an die Datenverarbeitungseinheit 7. Diese extrahiert aus den Fotos Körperdaten der Person. Dabei kann die Datenverarbeitungseinheit auf Bilderkennungsalgorithmen zurückgreifen oder einen internen oder externen, vorab mit Trainingsbeispielen trainierten Detektor, beispielsweise ein neuronales Netz, heranziehen. Dieser Detektor ist Teil der Datenverarbeitungseinheit 7.

Im vorliegenden Ausführungsbeispiel vergleicht die Datenverarbeitungseinheit 7 die aufgenommenen Fotos und/oder Videos mit auf einer Datenbank 10 hinterlegten Referenzkörperbildern 15 von vorab aufgenommenen Personen, um Körperdaten der Person zu extrahieren.

Aus den Körperdaten der Person generiert die Datenverarbeitungseinheit 7 ein Körperdatenmodell 8 in Form einer Tabelle von Punkten in einem Koordinatensystem oder in Form eines Graphen, also durch Linien (Kanten) verbundener Punktwolken. Dies hat den Vorteil, dass für die nachfolgenden Operationen weniger Speicherplatz und Rechenaufwand benötigt wird, als wenn die Fotos in Folge direkt verwendet werden würden.

Zur Generierung des Körperdatenmodells 8 ist die Datenverarbeitungseinheit 7 in Ausführungsformen der Erfindung dazu ausgebildet, in den Fotos oder Videos der Person vorbestimmte Schlüsselpunkte zu erkennen. Beispielsweise handelt es sich bei den Schlüsselpunkten um die Positionen der Augen, der Nase, der Schultern, der Ellenbogen, der Handgelenke, der Hüften, und/oder der Knie der Person.

Die Positionen dieser Schlüsselpunkte werden vorzugsweise in einem 2-dimensionalen Koordinatensystem gespeichert, um das Körperdatenmodell 8 zu bilden. Das Körperdatenmodell 8 kann beispielsweise bei einer Auflösung des Eingabebildes von 766 x 612 Pixeln folgenden Aufbau haben, wobei nicht zwingend für alle Schlüsselpunkte Koordinaten existieren müssen:

| Körperdatenmodell | | |
|---|---|---|
| Schlüsselpunkt | x-Koordinate | y-Koordinate |
| Auge rechts | 328 | 141 |
| Auge links | 360 | 146 |
| Ohr rechts | ... | ... |
| Ohr links | ... | ... |
| Nase | 340 | 142 |
| Schulter rechts | 362 | 98 |
| Schulter links | 285 | 75 |
| Ellenbogen rechts | ... | ... |
| Ellenbogen links | 243 | 43 |
| Handgelenk rechts | ... | ... |
| Handgelenk links | ... | ... |
| Hüfte rechts | ... | ... |
| Hüfte links | ... | ... |
| Knie rechts | ... | ... |
| Knie links | ... | ... |

Zusätzlich zu den Koordinatenwerten der Punkte können auch Verbindungen der Punkte zur Bildung eines Graphen gespeichert werden.

In weiteren Ausführungsformen der Erfindung können die Schlüsselpunkte des Körperdatenmodells 8 auch in einem 3-dimensionalen Koordinatensystem gespeichert sein. Dies erlaubt insbesondere eine verbesserte Verarbeitung beim nachfolgenden Vergleich mit den Referenzkörperposen.

Zur Generierung des Körperdatenmodells 8 bzw. zur Erkennung der Schlüsselpunkte können verschiedene Verfahren angewandt werden. Im vorliegenden Ausführungsbeispiel erfolgt die Schätzung von 2D Koordinaten der Schlüsselpunkte durch ein neuronales Netzwerk, welches einen direkten Vergleich der aufgenommenen Kamerabilder mit vorab gespeicherten Referenzbildern im zweidimensionalen Raum durchführt.

Zusätzlich können Tiefendaten, welche von einer Tiefenkamera (TOF-Kamer) parallel zur regulären 2D-Kamera aufgenommen werden, zur Schätzung von dreidimensionalen Koordinaten der Schlüsselpunkte herangezogen werden. Es können aber auch direkt 3D-Koordinaten durch ein 3D-Kamerasystem aufgenommen werden, wobei dann die Schätzung der 3D-Schlüsselpunkte durch ein neuronales Netzwerk erfolgt, welches einen direkten Vergleich der aufgenommenen Kamerabilder mit gespeicherten Referenzbildern im 3D-Raum durchführt.

Fig. 5 zeigt beispielhaft eine grafische Darstellung eines Körperdatenmodells 8 in einem 2-dimensionalen Koordinatensystem und den Vergleich mit einer Vielzahl von vorab in der Datenbank 10 hinterlegten 2D-Referenzkörperposen 11, 11 ', 11 ". Die Referenzkörperpose können dabei nach den oben genannten Posen ("nach vorne gelehnt", "nach hinten gelehnt", "Chill-Pose") klassifiziert sein.

Die Punktwolken bzw. Graphen des Körperdatenmodells 8 werden an eine Komparatoreinheit 9 übermittelt. Die Komparatoreinheit 9 vergleicht das Körperdatenmodell 8 mit einer Vielzahl an vorab in der Datenbank 10 gespeicherten Referenzkörperposen 11. Bei hinreichender Übereinstimmung mit einer Referenzkörperpose 11 entnimmt die Komparatoreinheit 9 Informationen über den zugeordneten Aktuator und die zugeordnete Einstellung und übermittelt diese an eine Aktivierungseinheit 12.

Zur Beurteilung der Übereinstimmung kann insbesondere ein vorab mit einer Vielzahl von Referenzkörperposen 11, 11 ', 11 " trainiertes neuronales Netz eingesetzt werden. Dieses neuronale Netz kann vorab beispielsweise mit Referenzkörperposen von verschiedenen Personen trainiert worden sein.

Die Aktivierungseinheit 12 aktiviert in Folge die betreffenden Aktuatoren mit den betreffenden Einstellungen. Im konkreten Ausführungsbeispiel veranlasst die Aktivierungseinheit 12, dass der elektrische Stellmotor 2 des Sitzes aktiviert wird, um den Sitz 3 nach hinten zu bewegen, und gleichzeitig dass die Auslösungsstärke eines Airbags 4 erhöht wird die Leuchtstärke einer Anzeigevorrichtung 5 im Armaturenbrett des Fahrzeugs 1 ebenfalls erhöht wird.

Die Erfindung beschränkt sich nicht auf die beschriebenen Ausführungsbeispiele sondern umfasst auch weitere Ausführungen der vorliegenden Erfindung im Rahmen der nachfolgenden Patentansprüche.

### Bezugszeichenliste

- 1: Fahrzeug
- 2: Stellmotor
- 3: Sitz
- 4: Airbag
- 5: Anzeigevorrichtung
- 6: Bildaufnahmeeinheit
- 7: Datenverarbeitungseinheit
- 8: Körperdatenmodell
- 9: Komparatoreinheit
- 10: Datenbank
- 11: Referenzkörperpose
- 12: Aktivierungseinheit
- 13: Blickrichtung
- 14: Gesichtsdatenmodell
- 15: Referenzkörperbild

## Patentansprüche

1. Verfahren zur Einstellung oder Steuerung zumindest einer Fahrzeugkomponente in einem Fahrzeug (1), insbesondere eines Aktuators, beispielsweise eines elektrischen Stellmotors (2) für einen Sitz (3), des Auslösemechanismus eines Airbags (4), oder einer Anzeigevorrichtung (5) im Fahrzeug (1), umfassend die folgenden Schritte:
- Aufnahme, durch eine im Fahrzeug (1) angeordnete Bildaufnahmeeinheit (6) in 2-D oder 3-D, eines Bildes oder eines Videos einer vorzugsweise sitzenden Person im Fahrzeug (1),
- Extraktion, durch eine Datenverarbeitungseinheit (7), von Körperdaten der Person, und Generierung, durch die Datenverarbeitungseinheit (7), eines Körperdatenmodells (8) aus den Körperdaten,
- Vergleich, durch eine Komparatoreinheit (9), des Körperdatenmodells (8) mit einer Vielzahl von aus einer Datenbank (10) entnommenen Referenzkörperposen (11) und Auswahl einer passenden Referenzkörperpose (11),
- Aktivierung, durch eine Aktivierungseinheit (12), eines, der ausgewählten Referenzkörperpose (11) zugeordneten Aktuators mit einer, der ausgewählten Referenzkörperpose (11) zugeordneten Einstellung des Aktuators,
**dadurch gekennzeichnet, dass**
- das Körperdatenmodell (8) in Form einer Tabelle mit 2-dimensionalen Koordinaten von Schlüsselpunkten des Körpers oder in Form eines Graphen mit Verbindungslinien zwischen den erkannten Schlüsselpunkten in der Datenverarbeitungseinheit (7) generiert wird, wobei
- der Vergleich des Körperdatenmodells (8) mit den Referenzkörperposen (11) und die Auswahl einer passenden Referenzkörperpose erfolgt, indem die Komparatoreinheit (9) einen Matching-Algorithmus oder ein Klassifikationsverfahren aus dem Bereich des maschinellen Lernens anwendet, insbesondere ein mit Referenzkörperbildern (15) trainiertes neuronales Netz.

2. Verfahren nach Anspruch 1, **dadurch gekennzeichnet, dass** vorab eine Vielzahl von definierten Referenzkörperposen (11) in der Datenbank (10) gespeichert werden, wobei jede Referenzkörperpose (11) mit zumindest einem Aktuator und zumindest einer Einstellung dieses Aktuators verknüpft wird.

3. Verfahren nach Anspruch 2, **dadurch gekennzeichnet, dass** eine Referenzkörperpose (11) mit einer Vielzahl an Aktuatoren kombiniert wird, wobei für jeden Aktuator eine definierte Einstellung vorgesehen ist.

4. Verfahren nach einem der Ansprüche 1 bis 3, **dadurch gekennzeichnet, dass** die Aktivierungseinheit (12) vor der Aktivierung des Aktuators die aktuelle Einstellung des Aktuators überprüft.

5. Verfahren nach einem der Ansprüche 1 bis 4, **dadurch gekennzeichnet, dass** die Datenverarbeitungseinheit (7) ein Gesichtsdatenmodell (14) generiert, daraus die Blickrichtung (13) oder die Kopforientierung der Person extrahiert, und die detektierte Blickrichtung (13) oder Kopforientierung
- von der Datenverarbeitungseinheit (7) bei der Auswahl der Referenzkörperpose (11) berücksichtigt wird und/oder
- von der Aktivierungseinheit (12) bei der Aktivierung des Aktuators berücksichtigt wird.

6. Verfahren nach einem der Ansprüche 1 bis 5, **dadurch gekennzeichnet, dass** der Vergleich des Körperdatenmodells (8) mit den Referenzkörperposen (11) und die Auswahl einer passenden Referenzkörperpose erfolgt, indem die Komparatoreinheit (9)
- räumliche Körperkenngrößen des Körperdatenmodells (8) bestimmt, beispielsweise die Schulterbreite, die Rumpflänge und die Anordnung der Schultergelenke, der Oberarme, der Unterarme und des Beckens der Person, und
- vorbestimmte Heuristiken anwendet, um eine der Referenzkörperposen (11) auszuwählen, beispielsweise den Winkel zwischen den detektierten Oberarmen und Unterarmen der Person.

7. Verfahren nach einem der Ansprüche 1 bis 6, **dadurch gekennzeichnet, dass** es sich bei den Körperdaten zumindest um Positionen von definierten Schlüsselpunkten, wie zum Beispiel Handgelenken, Armgelenken, Brustbein, Schultergelenken, Kniegelenken, Ellbogengelenken, Hüftgelenken, oder Kopfmittelpunkte, sowie um Abmessungen zwischen diesen Positionen, wie zum Beispiel Schulterbreite, Beckenbreite, Halslänge, Oberarmlänge, Unterarmlänge, Oberschenkellänge, und dergleichen handelt.

8. Computerlesbares Speichermedium, umfassend Anweisungen, die eine Datenverarbeitungseinheit (7) zur Ausführung eines Verfahrens nach einem der Ansprüche 1 bis 7 veranlassen.

9. Vorrichtung zur Einstellung oder Steuerung zumindest eines Aktuators in einem Fahrzeug (1), beispielsweise eines elektrischen Stellmotors (2) für einen Sitz (3), des Auslösemechanismus eines Airbags (4), oder einer Anzeigevorrichtung (5) im Fahrzeug (1), umfassend:
- eine im Fahrzeug (1) angeordnete Bildaufnahmeeinheit (6) in 2-D oder 3-D, die zur Aufnahme eines Bildes oder eines Videos einer vorzugsweise sitzenden Person im Fahrzeug (1) ausgebildet ist,
- eine Datenverarbeitungseinheit (7), die zur Extraktion von Körperdaten der Person, und zur Generierung eines Körperdatenmodells (8) aus den Körperdaten ausgebildet ist,
- eine Komparatoreinheit (9), die zum Vergleich des Körperdatenmodells (8) mit einer Vielzahl von aus einer Datenbank (10) entnommenen Referenzkörperposen (11) und Auswahl einer passenden Referenzkörperpose (11) ausgebildet ist,
- eine Aktivierungseinheit (12), die zur Aktivierung eines, der ausgewählten Referenzkörperpose (11) zugeordneten Aktuators mit einer, der ausgewählten Referenzkörperpose (11) zugeordneten Einstellung des Aktuators ausgebildet ist,
**dadurch gekennzeichnet, dass**
- die Datenverarbeitungseinheit dazu ausgebildet ist, das Körperdatenmodell (8) in Form einer Tabelle mit 2-dimensionalen Koordinaten von Schlüsselpunkten des Körpers oder in Form eines Graphen mit Verbindungslinien zwischen den erkannten Schlüsselpunkten zu generieren, wobei
- die Komparatoreinheit (9) dazu ausgebildet ist, zum Vergleich des Körperdatenmodells (8) mit den Referenzkörperposen (11) und zur Auswahl einer passenden Referenzkörperpose einen Matching-Algorithmus oder ein Klassifikationsverfahren aus dem Bereich des maschinellen Lernens anzuwenden, insbesondere ein mit Referenzkörperbildern (15) trainiertes neuronales Netz.

10. Vorrichtung nach Anspruch 9, **dadurch gekennzeichnet, dass** die Datenverarbeitungseinheit (7) dazu ausgebildet ist, ein Gesichtsdatenmodell (14) zu generieren, daraus die Blickrichtung (13) oder die Kopforientierung der Person zu extrahieren, und dazu ausgebildet ist, die detektierte Blickrichtung (13) oder Kopforientierung bei der Auswahl der Referenzkörperpose (11) zu berücksichtigen, und/oder die Aktivierungseinheit (12) dazu ausgebildet ist, die detektierte Blickrichtung (13) oder Kopforientierung bei der Aktivierung des Aktuators zu berücksichtigen.

11. Vorrichtung nach Anspruch 9 oder 10, **dadurch gekennzeichnet, dass** das Klassifikationsverfahren ein Teil der Datenverarbeitungseinheit (7) ist.

12. Vorrichtung nach einem der Ansprüche 9 bis 11, **dadurch gekennzeichnet, dass** die Komparatoreinheit (9) dazu ausgebildet ist, beim Vergleich des Körperdatenmodells (8) mit den Referenzkörperposen (11) und bei der Auswahl einer passenden Referenzkörperpose räumliche Körperkenngrößen des Körperdatenmodells (8) zu bestimmen, beispielsweise die Schulterbreite, die Rumpflänge und die Anordnung der Schultergelenke, der Oberarme, der Unterarme und des Beckens der Person, und ferner dazu ausgebildet ist, vorbestimmte Heuristiken anzuwenden, um eine der Referenzkörperposen (11) auszuwählen, beispielsweise den Winkel zwischen den detektierten Oberarmen und Unterarmen der Person.

13. Vorrichtung nach einem der Ansprüche 9 bis 12, **dadurch gekennzeichnet, dass** die Vorrichtung zur Gänze in einem Fahrzeug angeordnet ist.

## Claims

1. A method for adjusting or controlling at least one vehicle component in a vehicle (1), in particular an actuator, for example an electrical servo motor (2) for a seat (3), a tripping mechanism of an airbag (4), or a display device (5) in the vehicle (1), comprising the following steps:
- capturing an image or a video of a preferably sitting person in the vehicle (1) through an image capturing unit (6) in 2D or 3D arranged in the vehicle (1),
- extracting the body data of the person through a data processing unit (7) and generation of a body data model (8) from the body data through a data processing unit (7),
- comparing, through a comparator unit (9), the body data model (8) with a plurality of reference body poses (11) obtained from a database (10) and selecting a corresponding reference body pose (11),
- activating an actuator assigned to the selected reference body pose (11) with a setting of the actuator assigned to the selected reference body pose (11) through an activation unit (12),
**characterized in that**
- the body data model (8) is generated in form of a table with two-dimensional coordinates of key points of the body or in form of graphs with connecting lines in between the detected key points in the data processing unit (7), wherein
- the comparison of the body data model (8) with the reference body poses (11) and the selection of a corresponding reference body pose is carried out by the comparator unit (9) which applies a matching algorithm or a machine learning classification method, in particular a neuronal network trained with reference body images (15).

2. The method according to claim 1, **characterized in that** a plurality of defined reference body poses (11) are previously saved in a database (10), wherein each reference body pose (11) is linked to at least one actuator and at least one setting of this actuator.

3. The method according to claim 2, **characterized in that** a reference body pose (11) is combined with a plurality of actuators, wherein a defined setting is provided for each actuator.

4. The method according to one of claims 1 to 3, **characterized in that** the activation unit (12) assesses the current setting of the actuator before activating the actuator.

5. The method according to one of claims 1 to 4, **characterized in that** the data processing unit (7) generates a face data model (14) from which the line of vision (13) or the head orientation of the person are extracted, and the detected line of vision (13) or head orientation
- is taken into account by the data processing unit (7) in the selection of the reference body pose (11) and/or
- is taken into account by the activation unit (12) in the activation of the actuator.

6. The method according to one of claims 1 to 5, **characterized in that** the comparison of the body data model (8) with the reference body poses (11) and the selection of a corresponding reference body pose is carried out by the comparator unit (9)
- determining spatial body parameters of the body data model (8), for example the shoulder width, the torso length and the arrangement of the person's shoulder joints, upper arms, lower arms and pelvis, and
- applying predetermined heuristics in order to select one of the reference body poses (11), for example the angle between the detected upper arms and lower arms of the person.

7. The method according to one of claims 1 to 6 **characterized in that** the body data refer to at least positions of defined key points, such as wrist joints, arm joints, sternum, shoulder joints, knee joints, elbow joints, hip joints, or head centre points, as well as measurements between these positions, such as shoulder width, pelvis width, neck length, upper arm length, lower arm length, thigh length and the like.

8. A computer-readable storage medium, comprising instructions which cause a data processing unit (7) to perform a method according to one of claims 1 to 7.

9. A device for adjusting or controlling at least one actuator in a vehicle (1), for example an electrical servo motor (2) for a seat (3), a tripping mechanism of an airbag (4), or a display device (5) in the vehicle (1), comprising:
- an image capturing unit (6) in 2D or 3D arranged in the vehicle (1), which is designed to capture an image or a video of a preferably sitting person in the vehicle (1),
- a data processing unit (7) that is designed to extract the body data of the person and to generate a body data model (8) from the body data,
- a comparator unit (9) that is designed to compare the body data model (8) with a plurality of reference body poses (11) obtained from a database (10) and to select a corresponding reference body pose (11),
- an activation unit (12) that is designed to activate an actuator assigned to the selected reference body pose (11) with a setting of the actuator assigned to the selected reference body pose (11),
**characterized in that**
- the data processing unit is designed to generate the body data model (8) in form of a table with two-dimensional coordinates of key points of the body or in form of graphs with connecting lines in between the detected key points, wherein
- the comparator unit (9) is designed to apply a matching algorithm or a machine learning classification method, in particular a neuronal network trained through reference body images (15), in order to compare the body data model (8) to the reference body poses (11) and in order to select a corresponding reference body pose.

10. The device according to claim 9, **characterized in that** the data processing unit (7) is designed to generate a face data model (14) from which the line of vision (13) or the head orientation of the person are extracted, and to take into account the detected line of vision (13) or the head orientation when selecting the reference body pose (11), and/or the activation unit (12) is designed to take into account the detected line of vision (13) or the head orientation when activating the actuator.

11. The device according to claim 9 or 10, **characterized in that** the classification method is part of the data processing unit (7).

12. The device according to one of claims 9 to 11, **characterized in that** the comparator unit (9) is designed to determine spatial body parameters of the body data model (8) when comparing the body data model (8) with the body reference body poses (11) and when selecting a corresponding reference body pose, for example shoulder width, torso length and arrangement of shoulder joints, upper arms, lower arms and pelvis of the person, and is further designed to apply predetermined heuristics in order to select one of the reference body poses (11), for example the angle between the detected upper arms and lower arms of the person.

13. The device according to one of claims 9 to 12, **characterized in that** the device is arranged entirely in a vehicle.

## Revendications

1. Procédé de réglage ou de contrôle d'au moins un composant de véhicule dans un véhicule (1), en particulier un actionneur, par exemple un servomoteur électrique (2) pour un siège (3), le mécanisme de déclenchement d'un airbag (4) ou un dispositif d'affichage (5) dans le véhicule (1), comprenant les étapes suivantes :
- capture, par une unité de capture d'images (6) disposée dans le véhicule (1), en 2-D ou 3-D, d'une image ou d'une vidéo d'une personne, de préférence assise, dans le véhicule (1),
- extraction, par une unité de traitement de données (7), de données corporelles de la personne, et génération, par l'unité de traitement de données (7), d'un modèle de données corporelles (8) à partir des données corporelles,
- comparaison, par une unité de comparaison (9), du modèle de données corporelles (8) avec une pluralité de poses corporelles de référence (11) extraites d'une base de données (10) et sélection d'une pose corporelle de référence appropriée (11),
- activation, par une unité d'activation (12), d'un actionneur associé à la pose corporelle de référence sélectionnée (11) avec un réglage de l'actionneur associé à la pose corporelle de référence sélectionnée (11),
**caractérisé**
- **en ce que** le modèle de données corporelles (8) est généré dans l'unité de traitement de données (7) sous la forme d'un tableau avec des coordonnées bidimensionnelles de points clés du corps ou sous la forme d'un graphe avec des lignes de liaison entre les points clés identifiés, dans lequel
- la comparaison du modèle de données corporelles (8) avec les poses corporelles de référence (11) et la sélection d'une pose corporelle de référence appropriée s'effectuent en ce que l'unité de comparaison (9) applique un algorithme d'appariement ou un procédé de classification du domaine de l'apprentissage automatique, en particulier un réseau neuronal entraîné avec des images corporelles de référence (15).

2. Procédé selon la revendication 1, **caractérisé en ce qu'**une pluralité de poses corporelles de référence (11) définies sont préalablement enregistrées dans la base de données (10), chaque pose corporelle de référence (11) étant associée à au moins un actionneur et à au moins un réglage de cet actionneur.

3. Procédé selon la revendication 2, **caractérisé en ce qu'**une pose corporelle de référence (11) est combinée avec une pluralité d'actionneurs, un réglage défini étant prévu pour chaque actionneur.

4. Procédé selon l'une des revendications 1 à 3, **caractérisé en ce que** l'unité d'activation (12) vérifie le réglage actuel de l'actionneur avant d'activer l'actionneur.

5. Procédé selon l'une des revendications 1 à 4, **caractérisé en ce que** l'unité de traitement de données (7) génère un modèle de données faciales (14), en extrait la direction du regard (13) ou l'orientation de la tête de la personne, et la direction du regard (13) ou l'orientation de la tête détectée
- est prise en compte par l'unité de traitement de données (7) lors de la sélection de la pose corporelle de référence (11) et/ou
- est prise en compte par l'unité d'activation (12) lors de l'activation de l'actionneur.

6. Procédé selon l'une des revendications 1 à 5, **caractérisé en ce que** la comparaison du modèle de données corporelles (8) avec les poses corporelles de référence (11) et la sélection d'une pose corporelle de référence appropriée s'effectuent **en ce que** l'unité de comparaison (9)
- détermine des caractéristiques corporelles spatiales du modèle de données corporelles (8), par exemple la largeur des épaules, la longueur du tronc et la disposition des articulations des épaules, des bras, des avant-bras et du bassin de la personne, et
- applique des heuristiques prédéterminées pour sélectionner l'une des poses corporelles de référence (11), par exemple l'angle entre les bras et les avant-bras détectés de la personne.

7. Procédé selon l'une des revendications 1 à 6, **caractérisé en ce que** les données corporelles sont au moins des positions de points clés définis, tels que les poignets, les articulations des bras, le sternum, les articulations des épaules, les articulations des genoux, les articulations des coudes, les articulations des hanches, ou des points centraux de la tête, ainsi que des dimensions entre ces positions, telles que la largeur des épaules, la largeur du bassin, la longueur du cou, la longueur du bras, la longueur de l'avant-bras, la longueur de la cuisse, et analogues.

8. Support de mémoire lisible par ordinateur, comprenant des instructions qui amènent une unité de traitement de données (7) à exécuter un procédé selon l'une des revendications 1 à 7.

9. Dispositif de réglage ou de contrôle d'au moins un actionneur dans un véhicule (1), par exemple un servomoteur électrique (2) pour un siège (3), le mécanisme de déclenchement d'un airbag (4) ou un dispositif d'affichage (5) dans le véhicule (1), comprenant :
- une unité de capture d'images (6) en 2D ou 3D disposée dans le véhicule (1), qui est conçue pour capturer une image ou une vidéo d'une personne, de préférence assise, dans le véhicule (1),
- une unité de traitement de données (7), qui est conçue pour extraire des données corporelles de la personne et pour générer un modèle de données corporelles (8) à partir des données corporelles,
- une unité de comparaison (9) qui est conçue pour comparer le modèle de données corporelles (8) avec une pluralité de poses corporelles de référence (11) prises dans une base de données (10) et pour sélectionner une pose corporelle de référence (11) appropriée,
- une unité d'activation (12) qui est conçue pour activer un actionneur associé à la pose corporelle de référence (11) sélectionnée avec un réglage de l'actionneur associé à la pose corporelle de référence (11) sélectionnée,
**caractérisé**
- **en ce que** l'unité de traitement de données est conçue pour générer le modèle de données corporelles (8) sous la forme d'un tableau avec des coordonnées bidimensionnelles de points clés du corps ou sous la forme d'un graphe avec des lignes de liaison entre les points clés identifiés, dans lequel
- l'unité de comparaison (9) est conçue pour appliquer un algorithme d'appariement ou un procédé de classification du domaine de l'apprentissage automatique, en particulier un réseau neuronal entraîné avec des images corporelles de référence (15), pour comparer le modèle de données corporelles (8) avec les poses corporelles de référence (11) et pour sélectionner une pose corporelle de référence appropriée.

10. Dispositif selon la revendication 9, **caractérisé en ce que** l'unité de traitement de données (7) est conçue pour générer un modèle de données faciales (14), en extraire la direction du regard (13) ou l'orientation de la tête de la personne, et est conçue pour prendre en compte la direction du regard (13) ou l'orientation de la tête détectée lors de la sélection de la pose corporelle de référence (11) et/ou l'unité d'activation (12) est conçue pour prendre en compte la direction du regard (13) ou l'orientation de la tête détectée lors de l'activation de l'actionneur.

11. Dispositif selon la revendication 9 ou 10, **caractérisé en ce que** le procédé de classification fait partie de l'unité de traitement de données (7).

12. Dispositif selon l'une des revendications 9 à 11, **caractérisé en ce que** l'unité de comparaison (9) est conçue pour déterminer des caractéristiques corporelles spatiales du modèle de données corporelles (8) lors de la comparaison du modèle de données corporelles (8) avec les poses corporelles de référence (11) et lors de la sélection d'une pose corporelle de référence appropriée, par exemple la largeur des épaules, la longueur du tronc et la disposition des articulations des épaules, des bras, des avant-bras et du bassin de la personne, et est en outre conçue pour appliquer des heuristiques prédéterminées afin de sélectionner l'une des poses corporelles de référence (11), par exemple l'angle entre les bras et les avant-bras détectés de la personne.

13. Dispositif selon l'une des revendications 9 à 12, **caractérisé en ce que** le dispositif est disposé entièrement dans un véhicule.
